Europäisches Patentamt

European Patent Office

Office européen des brevets

(19)

(11) **EP 1 058 812 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(21) Anmeldenummer: **99914423.1**

(22) Anmeldetag: **16.02.1999**

(51) Int Cl.⁷: **G01B 9/02**, G01B 11/14, G01B 11/30

(86) Internationale Anmeldenummer:
**PCT/DE99/00433**

(87) Internationale Veröffentlichungsnummer:
**WO 99/044009 (02.09.1999 Gazette 1999/35)**

(54) **INTERFEROMETRISCHE MESSEINRICHTUNG ZUM ERFASSEN DER FORM ODER DES ABSTANDES INSBESONDERE RAUHER OBERFLÄCHEN**

INTERFEROMETRIC MEASURING DEVICE FOR DETERMINING THE PROFILE OR THE DISTANCE, ESPECIALLY OF ROUGH SURFACES

DISPOSITIF DE MESURE INTERFEROMETRIQUE POUR DETERMINER LE PROFIL OU LA DISTANCE DE SURFACES, NOTAMMENT DE SURFACES RUGUEUSES

(84) Benannte Vertragsstaaten:
**CH DE FR GB LI NL**

(30) Priorität: **27.02.1998 DE 19808273**

(43) Veröffentlichungstag der Anmeldung:
**13.12.2000 Patentblatt 2000/50**

(73) Patentinhaber: **ROBERT BOSCH GMBH**
**70442 Stuttgart (DE)**

(72) Erfinder: **DRABAREK, Pawel**
**D-75233 Tiefenbronn (DE)**

(56) Entgegenhaltungen:
**EP-B1- 0 126 475       WO-A1-92/10719**
**DE-A1- 3 906 118       DE-A1- 4 404 663**

• **ROVATI L., DOCCHIO F.: 'Low-coherence interferometry using a self-mixing superluminescent diode' IEEE PHOTONICS LETTERS Bd. 10, 01 Januar 1998, Seiten 123 - 125**

**Beschreibung**

Die Erfindung bezieht sich auf eine interferometrische Messeinrichtung zum Erfassen der Form oder des Abstandes insbesondere rauher Oberflächen mit mindestens einer räumlich kohärenten Strahlerzeugungseinheit, deren Strahlung in einer Messsonde der Messeinrichtung in einen durch einen Messreferenzzweig geführten und darin reflektierten Referenzmessstrahl und in einen durch einen Messzweig geführten und an der rauhen Oberfläche reflektierten Messstrahl aufgeteilt wird, mit einer Einrichtung zur Modulation der Licht-Phase oder zum Verschieben der Licht-Frequenz entsprechend einer Heterodynfrequenz eines ersten Teilstrahls gegenüber der Licht-Phase oder der Licht-Frequenz eines zweiten Teilstrahls mit einer Überlagerungseinheit zum Überlagern des reflektierten Messreferenzstrahls mit dem reflektierten Messstrahl, mit einer Strahlzerlegungs- und Strahlempfangseinheit zum Aufspalten der überlagerten Strahlung auf zumindest zwei Strahlen mit unterschiedlichen Wellenlängen und Umwandeln der Strahlung in elektrische Signale und mit einer Auswerteeinrichtung, in der die Form bzw. der Abstand der rauhen Oberfläche auf der Grundlage einer Phasendifferenz der elektrischen Signale bestimmbar ist.

Stand der Technik

Eine derartige interferometrische Messeinrichtung ist in der EP 0 126 475 B1 als bekannt ausgewiesen. Bei dieser bekannten Messeinrichtung werden rauhe Oberflächen eines Messobjektes interferometrisch ausgemessen, wobei eine Strahlerzeugungseinheit mit Laserlichtquellen verwendet wird, die Licht unterschiedlicher Wellenlängen abgeben. Mittels eines Strahlteilers wird das Laserlicht in einen Referenzstrahl eines Referenzstrahlengangs und einen Messstrahl eines Messstrahlengangs aufgeteilt. Der Messstrahlengang trifft auf die zu vermessende Oberfläche, während der Referenzstrahlengang an einer Referenzfläche z.B. in Form eines Spiegels reflektiert wird. Das von der Oberfläche und der Referenzfläche reflektierte Licht wird im Strahlteiler vereinigt und mit Hilfe einer Linse in eine Interferogrammebene fokussiert, in der ein Speckle-Muster auftritt. Dieses Speckle-Muster wird zur Bestimmung der Oberflächenform ausgewertet, wobei eine Phasendifferenz der Interferogrammphasen im Messpunkt bestimmt wird. Zur Vereinfachung der Auswertung wird ein Heterodyn-Verfahren angewendet, wobei. die Frequenz des Referenzstrahles um eine Heterodynfrequenz mittels einer Frequenzverschiebungseinrichtung im Referenzstrahlengang gegenüber der Frequenz des Messstrahles verschoben wird. Mit dieser Messeinrichtung können Oberflächenformen fein aufgelöst werden. Das Laserlicht mit unterschiedlichen, diskreten Wellenlängen kann entweder mit einzelnen Laserlichtquellen erzeugt werden, wie z.B. Argon-Laser. Derartige Laserlichtquellen sind relativ teuer. Halbleitlaser mit mehreren unterschiedlichen diskreten Wellenlängen (Moden) dagegen sind für derartige interferometrische Messungen ungünstig wegen der mangelnden Stabilität und damit verbundenen Wellenlängenverschiebung. Oder es können mehrere Laserlichtquellen, wie Laserdioden verwendet werden, um die verschiedenen diskreten Wellenlängen zu erzeugen. Dabei ist es technisch aufwendig, die räumliche Kohärenz der aus den verschiedenen Wellenlängen zusammengesetzten Strahlung zu erzeugen. Außerdem ist bei derartigen Laserdioden die Instabilität der einzelnen diskreten Wellenlängen besonders ungünstig. Damit zusammenhängend ist es auch aufwendig mehrere verschiedene diskrete Wellenlängen zur Verfügung zu stellen.

Bei Verwendung von Laserlicht zur Erzeugung der diskreten Wellenlängen ist es auch schwierig, den gewünschten Abstand zwischen Messsonde und Oberfläche genau einzustellen (Autofokusfunktion). Der Aufbau mit der Laserlichtquelle macht es ferner schwierig, den Messteil als gut handhabbare Einheit auszubilden, die z.B. anstatt eines mechanischen Tasters einer Messmaschine eingesetzt werden kann.

Eine weitere interferometrische Messeinrichtung ist in der DE 39 06 118 A1 angegeben, bei der zwischen mehreren Laserlichtquellen und einem Messabschnitt Lichtleitfasern vorgesehen sind. Auch hierbei wird zum Bestimmen der Oberflächenstrukturen eine Phasendifferenz ausgewertet. Hinsichtlich der Handhabung an schwer zugänglichen Stellen ist auch dieser bekannte Aufbau ungünstig.

Der Erfindung liegt die Aufgabe zugrunde, eine heterodyn- oder phaseninterferometrische Messeinrichtung der eingangs angegebenen Art bereitzustellen, mit der bei einfacher Handhabung und einfachem Aufbau auch an verhältnismäßig schwer zugänglichen Oberflächen, wie z.B. kleinen Bohrungen, unter Fertigungsbedingungen sehr genaue Messungen der Oberflächenform bzw. des Oberflächenabstandes möglich sind.

Vorteile der Erfindung

Diese Aufgabe wird mit den Merkmalen des Anspruches 1 gelöst. Hiernach ist vorgesehen, dass die von der Strahlerzeugungseinheit abgegebene Strahlung zeitlich kurzkohärent und breitbandig ist, dass die Strahlerzeugungseinheit, ein Strahlteiler zum Bilden des ersten und zweiten Teilstrahls und die Einrichtung zur Phasenmodulation oder Frequenzverschiebung in einer von der Messsonde räumlich beabstandeten, als Modulationsinterferometer ausgebildeten Baueinheit angeordnet sind, und dass in der Baueinheit in dem Strahlengang eines Teilstrahls ein Verzögerungselement angeordnet ist, das eine Differenz der optischen Weglängen der beiden Teilstrahlen ergibt, die länger als die Kohärenzlänge der von der Strahlerzeugungseinheit abgegebenen Strahlung ist.

Es hat sich überraschend gezeigt, dass die zeitlich kurzkohärenten und breitbandigen Strahlerzeugungseinheiten mit gleichzeitig hoher räumlicher Kohärenz als Lichtquelle einer heterodyn-interferometrischen Messeinrichtung insbesondere in Verbindung mit der Messung an rauhen Oberflächen nicht nur gut geeignet sind, sondern gegenüber Laserlichtquellen erhebliche Vorteile bringen. Die räumliche Kohärenz der Strahlung ist durch die Lichtquelle von Hause aus gegeben. Instabilitäten der spektralen Strahlungsverteilung der Lichtquelle wirken sich bei der Messung praktisch nicht aus, da mittels der Strahlzerlegungseinheit (z.B. Gitter) und der zugeordneten Strahlempfangseinheit stets nicht nur einzelne feste Wellenlängen aus dem kontinuierlichen Spektrum stabil ausgewählt werden, sondern insbesondere auch deren für die genaue, eindeutige Auswertung wichtige Differenz stabil beibehalten wird. Intensitätsänderungen der Wellenlängen bei Instabilitäten wirken sich wegen der Heterodyntechnik nicht aus, da dabei lediglich die Phasen eine Rolle spielen. Durch die zeitlich kurzkohärente Strahlung kann eine Autofokusfunktion sehr einfach realisiert werden, da das Heterodynsignal nur für einen bestimmten Abstandsbereich zwischen Messteil und Oberfläche, der durch die kurze Kohärenzlänge bedingt ist, vorhanden ist.

Ferner bringt die kurze zeitliche Kohärenzlänge den Vorteil, dass das gesamte Messsystem auf einfache Weise mittels Kohärenzmultiplex in ein die aktiven Komponenten beinhaltendes Modulationsinterferometer und einen davon räumlich z.B. über Lichtleiter getrennten, als Messsonde ausgebildeten kleinen und robusten, leicht handhabbaren Messteil aufgeteilt werden kann. Dabei ist der Aufbau für einen Einsatz bei der Fertigung vorteilhaft.

Auch die Ansprüche 3 und 4 geben einen für den Einsatz bei der Fertigung günstigen Aufbau wieder. Bei dem Mach-Zehnder-Aufbau wird durch die beiden in beiden Teilstrahlengängen angeordneten akustooptischen Modulatoren die Differenz der Winkeldispersion minimiert.

Es kann vorgesehen sein dass die Strahlerzeugungseinheit eine kurzkohärente, breitbandige Zusatzlichtquelle aufweist, die zur Erhöhung der Lichtstärke oder als Ersatzlichtquelle betreibbar ist. Hiermit kann bei gleichzeitiger Verwendung der beiden Lichtquellen die Lichtstärke erhöht werden oder es kann die Zusatz-Lichtquelle als Ersatzlichtquelle bei Ausfall der anderen Lichtquelle verwendet werden.

Die Maßnahmen, dass zur Frequenzverschiebung des ersten Teilstrahls gegenüber dem zweiten Teilstrahl in dem Strahlengang des zweiten Teilstrahls eine zusätzliche Einrichtung zur Frequenzverschiebung angeordnet ist und dass die Einrichtung und die zusätzliche Einrichtung zur Frequenzverschiebung akustooptische Modulatoren sind, sind geeignet, eine kleine Winkeldispersion zu erreichen. Einem Messfehler durch Temperaturdrift und einer damit verbundenen Brechzahländerung eines akustooptischen Modulators, die zu einer ungewollten Phasenverschiebung führt, wird durch die Anordnung der Modulatoren in beiden Strahlengängen entgegengewirkt.

Für den Aufbau und die Auswertung sind weiterhin die Maßnahmen günstig, dass die Strahlzerlegungs- und Strahlempfangseinheit ein Spektralapparat mit nachgeschalteter Photodetektormatrix ist und dass die Strahlzerlegungs- und Strahlempfangseinheit ebenfalls in der Baueinheit untergebracht und über die Lichtleitfaseranordnung mit der Messsonde gekoppelt sind.

Der Aufbau und die Auswertung werden weiterhin dadurch begünstigt, dass die Messsonde mit dem Messzweig, dem Messreferenzzweig und einem Strahlteiler der Messsonde als Michelson- oder Mirau-Interferometer ausgebildet sind, und dass eine in dem Messzweig und in dem Messreferenzzweig erzeugte optische Wegdifferenz die mittels des Verzögerungselementes erzeugte optische Wegdifferenz aufhebt.

Ist vorgesehen, dass von dem zweiten Strahlteiler ausgehend ein weiterer Strahlengang gebildet ist, der zu einer Bezugssonde mit einem Bezugssonden-Referenzarm und einem Bezugssonden-Messarm führt, dass in der Baueinheit eine weitere Strahlzerlegungs- und Strahlempfangseinheit vorgesehen ist, und dass die Baueinheit über eine weitere Lichtleitfaseranordnung mit der Referenzsonde gekoppelt ist, so kann mittels der Bezugssonde ein Drehtisch-Fehler kompensiert werden, der zum Bewegen des Messobjektes mit der zu messenden Oberflächenstruktur verwendet wird. Ferner kann die Bezugssonde zum Kompensieren einer z.B. durch Temperatur verursachten Drift des in der Baueinheit vorgesehenen Modulationsinterferometers herangezogen werden.

Im Ralnnen der Erfindung ist ausserdem vorgesehen, die erfindungsgemässe Messeinrichtung für die Innengeometrie-Vermessung an Bohrungen einzusetzen, wie im Anspruch 10 definiert.

Zeichnung

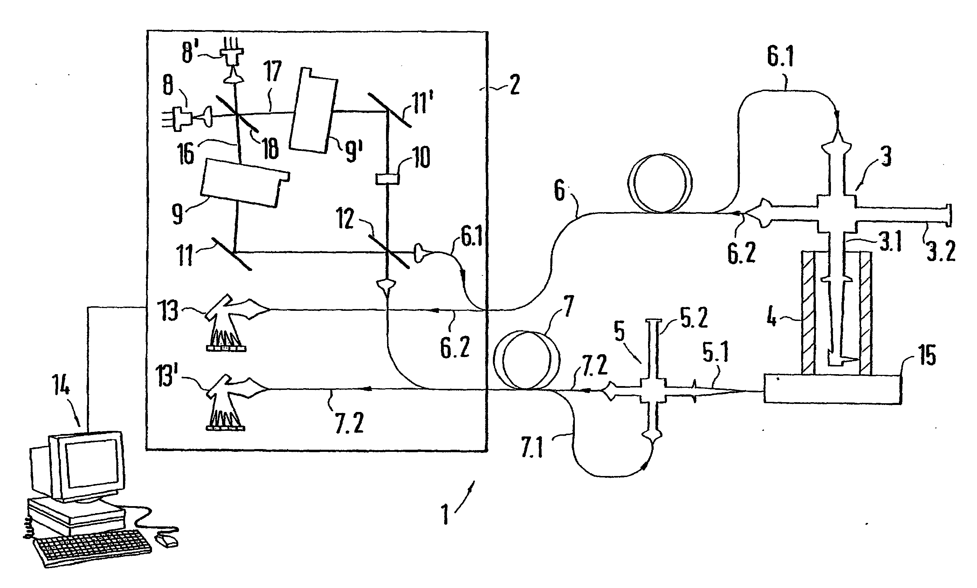

Die Erfindung wird nachfolgend anhand eines Ausführungsbeispiels unter Bezugnahme auf die Zeichnung näher erläutert. Die Fig. zeigt eine Anordnung der wesentlichen Komponenten einer interferometrischen Messeinrichtung zum Erfassen der Form rauher Oberflächen in schematischer Darstellung.

Ausführungsbeispiel

Die interferometrische Messanordnung ist in zwei Abschnitte aufgeteilt, wovon die eine als Baueinheit 2 in Form eines Modulationsinterferometers ausgebildet ist, während der andere Abschnitt eine Messsonde 3, mit der ein auf einem Drehtisch 15 befindliches Messobjekt 4 mit einer zu messenden rauhen Oberfläche abgetastet wird, sowie eine Bezugssonde 5 umfasst. Die Messsonde 3 ist über eine Lichtleitfaseranordnung 6 mit dem Modulationsinterferometer 2 gekoppelt, während die Bezugssonde 5 über eine weitere Lichtleitfaseranordnung 7 mit dem Modulationsinterferometer 2 verbunden ist. Das Modulationsinterferometer 2 in Form der Baueinheit 2 ist vorliegend als Mach-Zehnder-Interferometer aufgebaut und weist die aktiven Komponenten auf, nämlich eine Lichtquelle 8 und eine zusätzliche Lichtquelle 8', in den Strahlengängen eines ersten Teilstrahls 16 und eines zweiten Teilstrahls 17 angeordnete akustooptische Modulatoren 9 bzw. 9' sowie zwei Photodetektormatrizen, die Teil einer Strahlzerlegungs- und Strahlempfangseinheit 13 bzw. einer zusätzlichen Strahlzerlegungs- und Strahlempfangseinheit 13' sind. Denkbar ist auch ein Aufbau als Michelson-Interferometer. Das Modulationsinterferometer 2 ist z.B. in einem klimatisierten, schwingungsisolierenden Gehäuse eingebaut.

Die Lichtquelle 8 und die zusätzliche Lichtquelle 8', z.B. Superluminiszenzdioden, sind kurzkohärente breitbandige Lichtquellen mit einer kontinuierlichen Strahlungsverteilung einer Vielzahl unterschiedlicher Wellenlängen. Das Licht der Lichtquelle 8 und das Licht der Lichtquelle 8' wird kollimiert und in den ersten Teilstrahl 16 und den zweiten Teilstrahl 17 mittels eines ersten Srahlterlers 18 aufgeteilt, wobei sich die Lichtquelle 8 und die zusätzliche Lichtquelle 8' auf verschiedenen Seiten des Strahlteilers 18 befinden. Die zusätzliche Lichtquelle 8' kann als vorjustierte Ersatzquelle oder zur Verstärkung der gesamten Lichtstärke eingesetzt werden. Die beiden Teilstrahlen 16, 17 werden mit Hilfe der beiden akustooptischen Modulatoren 9 bzw. 9' gegenseitig in der Frequenz verschoben. Die Frequenzdifferenz beträgt z.B. einige kHz. In dem einen Arm des z. B. als Mach-Zehnder-Interferometer oder Michelson-Interferometer aufgebauten Modulationsinterferometer 2 ist im Strahlengang hinter dem akustooptischen Modulator 9' und einem anschließenden Ablenkspiegel 11' ein Verzögerungselement 10 z.B. in Form einer planparallelen Glasplatte eingesetzt, das eine Differenz der optischen Weglängen der beiden Teilstrahlen 16, 17, die länger als die Kohärenzlänge der Lichtquelle 8 bzw. 8' ist, erzwingt. In dem Arm des Modulationsinterferometers 2 mit dem ersten Teilstrahl 16 ist hinter dem akustooptischen Modulator 9 ebenfalls ein Ablenkspiegel 11 angeordnet, von dem das Licht auf einen zweiten Strahlteiler 12 gelenkt wird. Die beiden Teilstrahlen 16, 17 werden in dem zweiten Strahlteiler 12 überlagert und in eine oder zwei Monomode-Lichtleiteranordnung/en eingekoppelt. Aufgrund der mittels des Verzögerungselements 10 bewirkten optischen Wegdifferenz interferieren die beiden Teilstrahlen 16, 17 nicht. Das Licht wird über die Licht-Leitfaseranordnung 6 zu der Meßsonde 3 und über die weitere Licht-Leitfaseranordnung 7 zu der Bezugssonde 5 geführt und dort ausgekoppelt. Die Meßsonde 3 bzw. die Bezugssonde 5 sind z.B. in Form eines Michelson- oder Mirau-Interferometers so aufgebaut, daß die optische Wegdifferenz der überlagerten Strahlen eines Meßzweiges 3.1 und Referenzzweiges 3.2 der Meßsonde 3 bzw. eines Bezugssonden-Referenzarmes 5.1 und eines Bezugssonden-Meßarmes 5.2 der optischen Wegdifferenz der beiden Teilstrahlen 16, 17 des Modulations-Interferometers 2 entspricht. In der Fig. sind die Meßsonde 3 und die Bezugssonde 5 als Michelson-Interferometer abgebildet.

Der durch den Meßzweig 3.1 verlaufende Meßstrahl wird mittels einer optischen Anordnung auf die zu vermessende Oberfläche des Meßobjektes 4 fokussiert. Das von der Oberfläche reflektierte Licht wird dem in dem Referenzzweig 3.2 an einem reflektierenden Element zurückgeführten Referenzstrahl überlagert und in eine zu der Strahlzerlegungs- und Strahlempfangseinheit 13 führende Lichtleitfaser eingekoppelt. Aufgrund des Wegdifferenzausgieichs können die Lichtstrahlen interferieren. Entsprechend wird das Licht des Bezugssonden-Meßarms 5.1 mit dem Licht des Bezugssonden-Referenzarmes 5.2 überlagert und der weiteren Strahlzerlegungs- und Strahlempfangseinheit 13' über die weitere Lichtleitfaseranordnung 7 über einen entsprechenden abführenden Zweig der weiteren Lichtleitfaseranordnung 7 zugeführt.

Aufgrund des Wegdifferenzausgleichs in der Meßsonde 3 bzw. der Bezugssonde 5 können die Lichtstrahlen interferieren. Die Lichtphasen-Differenz, die mittels des Heterodyn-Verfahrens in Verbindung mit den akustooptischen Modulatoren einfach auswertbar gemacht wird, beinhaltet Informationen über den Abstand zu der zu messenden Oberfläche des Meßobjektes 4 und damit über deren Oberflächenstruktur. Das von der Meßsonde 3 bzw. der Bezugssonde 5 in das Modulationsinterferometer 2 zurückgeleitete Licht wird aus der Lichtleitfaseranordnung 6 bzw. der weiteren Lichtleitfaseranordnung 7 ausgekoppelt, mit Hilfe eines Spektralelementes (z.B. Gitter oder Prisma) der Strahlzerlegungs- und Strahlempfangseinheit 13 bzw. weiteren Strahlzerlegungs- und Strahlempfangseinheit 13' in mehrere Farben bzw. Wellenlängen zerlegt und auf die Photodetektormatrix fokussiert. Jeder Photodetektor liefert ein elektrisches Signal mit der durch die akustooptischen Modulatoren 9, 9' erzeugten Differenzfrequenz und einer Phase $\varphi_n$, die mit der Oberflächenstruktur bzw. dem Abstand zum Meßobjekt mit der Meßgröße $\Delta L$ (Formabweichung, Rauhigkeit) und der zugehörigen Wellenlänge $\lambda_n$ gemäß der Beziehung

$$\varphi_n = (2\pi\lambda_n)\Delta L \cdot 2$$

zusammenhängt. Die Auswertung erfolgt auf der Grundlage einer Differenzbildung zwischen den Phasen der Signale unterschiedlicher Photodetektoren.

Durch die Vermessung der Phasendifferenzen der Signale mehrerer Photodetektoren (Mehrwellehlängen-Heterodyn-Interferometrie, vgl. die eingangs genannte Druckschrift mit weiteren Nachweisen) läßt sich die Meßgröße $\Delta L$, die größer als einzelne Lichtwellenlängen sein darf, in einer Auswerteeinrichtung, beispielsweise in Form eines Rechners 14, eindeutig bestimmen.

Mit dem beschriebenen Aufbau der interferometrischen Meßvorrichtung 1 wird eine vorteilhafte Trennung in einen Abschnitt mit der leicht handhabbaren Meßsonde 3 bzw. Bezugssonde 5 einerseits und einen Abschnitt mit den relativ empfindlichen Komponenten des Modulations-Interferometers 2 und der Auswerteeinrichtung erzielt. Die kurzkohärente, breitbandige Lichtquelle 8 bzw. 8' führt zur einfachen Bereitstellung mehrerer stabiler Strahlungsanteile unterschiedlicher Wellenlängen und zur verbesserten, eindeutigen Auswertung von Formabweichungen, die auch Vielfache einer Wellenlänge betragen können.

**Patentansprüche**

1. Interferometrische Messeinrichtung (1) zum Erfassen der Form oder des Abstandes insbesondere rauher Oberflächen mit mindestens einer räumlich kohärenten Strahlerzeugungseinheit (8, 8'), deren Strahlung in einer Messsonde (3) der Messeinrichtung in einen durch einen Messreferenzzweig (3.2) geführten und darin reflektierten Referenzmessstrahl und in einen durch einen Messzweig (3.1) geführten und an der rauhen Oberfläche reflektierten Messstrahl aufgeteilt wird, mit einer Einrichtung (9) zur Modulation der Licht-Phase oder zum Verschieben der Licht-Frequenz entsprechend einer Heterodynfrequenz eines ersten Teilstrahls (16) gegenüber der Licht-Phase oder der Licht-Frequenz eines zweiten Teilstrahls (17), mit einer Überlagerungseinheit zum Überlagern des reflektierten Messreferenzstrahls mit dem reflektierten Messstrahl, mit einer Strahlzerlegungs- und Strahlempfangseinheit (13) zum Aufspalten der überlagerten Strahlung auf zumindest zwei Strahlen mit unterschiedlichen Wellenlängen und Umwandeln der Strahlung in elektrische Signale und mit einer Auswerteeinrichtung (14), in der die Form bzw. der Abstand der rauhen Oberfläche auf der Grundlage einer Phasendifferenz der elektrischen Signale bestimmbar ist,
**dadurch gekennzeichnet,**
**dass** die von der Strahlerzeugungseinheit (8, 8') abgegebene Strahlung zeitlich kurzkohärent und breitbandig ist,
**dass** die Strahlerzeugungseinheit (8, 8'), ein Strahlteiler zum Bilden des ersten und zweiten Teilstrahls (16, 17) und die Einrichtung (9) zur Phasenmodulation oder Frequenzverschiebung in einer von der Messsonde (3) räumlich beabstandeten, als Modulationsinterferometer ausgebildeten Baueinheit (2) angeordnet sind, und
**dass** in der Baueinheit (2) in dem Strahlengang eines Teilstrahls ein Verzögerungselement (10) angeordnet ist, das eine Differenz der optischen Weglängen der beiden Teitstrahlen (16,17) ergibt, die länger als die Kohärenzlänge der von der Strahlerzeugungseinheit (8, 8') abgegebenen Strahlung ist.

2. Messeinrichtung nach Anspruch 1,
**dadurch gekennzeichnet,**
**dass** die Strahlerzeugungseinheit (8, 8') eine die zeitlich kurzkohärente und breitbandige Strahlung abgebende Lichtquelle ist.

3. Messeinrichtung nach Anspruch 1 oder 2,
**dadurch gekennzeichnet,**
**dass** die Baueinheit (2) und die Messsonde (3) mittels einer Lichtleiteranordnung (6) miteinander gekoppelt sind.

4. Messeinrichtung nach einem der vorhergehenden Ansprüche,
**dadurch gekennzeichnet,**
**dass** die Baueinheit (2) einen ersten Strahlteiler (18) zum Bilden des ersten und zweiten Teilstrahls (16, 17) und einen zweiten Strahlteiler, dem der erste und der zweite Teilstrahl (16, 17) zugeführt werden und an den beide Teilstrahlen (16, 17) überlagert werden und der den zur Messsonde (3) geführten Strahl weiterleitet, aufweist entsprechend einem Mach-Zehnder-Interferometer.

5. Messeinrichtung nach einem der vorhergehenden Ansprüche,
**dadurch gekennzeichnet,**
**dass** die Strahlerzeugungseinheit (8, 8') eine zeitlich kurzkohärente, breitbandige und räumlich kohärente Zusatzlichtquelle (8') aufweist, die zur Erhöhung der Lichtstärke oder als Ersatzlichtquelle betreibbar ist.

6. Messeinrichtung nach einem der vorhergehenden Ansprüche,
**dadurch gekennzeichnet,**
**dass** zur Frequenzverschiebung des ersten Teilstrahls (16) gegenüber dem zweiten Teilstrahl (17) in dem Strahlengang eines der beiden Teilstrahlen (16, 17) eine zusätzliche Einrichtung (9') zur Frequenzverschiebung angeordnet ist und
**dass** die Einrichtung (9) und die zusätzliche Einrichtung (9') zur Frequenzverschiebung akustooptische Modulatoren sind.

7. Messeinrichtung nach einem der vorhergehenden Ansprüche,
**dadurch gekennzeichnet,**
**dass** die Strahlzerlegungs- und Strahlempfangseinheit (13) ein Spektralapparat zur Aufspaltung des Lichts in mehrere Wellenlängen und eine nachgeschaltete Photodetektormatrix zum selektiven Empfang dieser Wellenlängen ist,
**dass** die Strahlzerlegungs- und Strahlempfangseinheit (13) ebenfalls in der Baueinheit (2) untergebracht ist,

**dass** die Strahlungszerlegungs- und die Strahlenempfangseinheit (13) über die Lichtleitfaseranordnung (6) mit der Messsonde (3) gekoppelt ist und

**dass** die Phasendifferenzen von Signalen von einzelnen Detektoren der Photödetektormatrix zur Bestimmung der Form oder des Abstands der Messoberfläche verwendet werden.

8. Messeinrichtung nach einem der vorhergehenden Ansprüche,
   **dadurch gekennzeichnet,**
   **dass** die Messsonde (3) mit dem Messzweig (3.1), dem Messreferenzzweig (3.2) und einem Strahlteiler der Messsonde (3) als Michelson- oder Mirau-Interferometer ausgebildet sind, und
   **dass** eine in dem Messzweig (3.1) und in dem Messreferenzzweig (3.2) erzeugte optische Wegdifferenz die mittels des Verzögerungselementes (10) erzeugte optische Wegdifferenz aufhebt.

9. Messeinrichtung nach einem der vorhergehenden Ansprüche,
   **dadurch gekennzeichnet,**
   **dass** von dem zweiten Strahlteiler (12) ausgehend ein weiterer Strahlengang gebildet ist, der zu einer Bezugssonde (5) mit einem Bezugssonden-Referenzarm (5.2) und einem Bezugssonden-Messarm (5.1) führt,
   **dass** in der Baueinheit (2) eine weitere Strahlzerlegungs- und Strahlempfangseinheit (13') vorgesehen sind, und
   **dass** die Baueinheit (2) über eine weitere Lichtleitfaseranordnung (7) mit der Referenzsonde (5) gekoppelt ist.

10. Verwendung der Messeinrichtung nach einem der vorhergehenden Ansprüche,
    **dadurch gekennzeichnet,**
    **dass** die Messeinrichtung für die Innengeometrie-Vermessung an Bohrungen eingesetzt wird.

**Claims**

1. Interferometric measuring device (1) for determining the profile or the distance of, in particular, rough surfaces, having at least one spatially coherent beam generating unit (8, 8') whose radiation is split up in a measuring probe (3) of the measuring device into a reference measuring beam which is guided through a measuring reference arm (3.2) and reflected therein, and into a measuring beam which is guided through a measuring arm (3.1) and reflected at the rough surface, having a device (9) for modulating the light phase or for shifting the light frequency, in accordance with a heterodyne frequency of a first component beam (16), with reference to the light phase or the light frequency of a second component beam (17), having a superimposition unit for superimposing the reflected measuring reference beam with the reflected measuring beam, having a beam splitting and beam receiving unit (13) for splitting up the superimposed radiation into at least two beams of different wavelengths and converting the radiation into electric signals, and having an evaluation device (14) in which the profile and/or the distance of the rough surface can be determined on the basis of a phase difference in the electric signals, **characterized in that** the radiation output by the beam generating unit (8, 8') is of short temporal coherence and broadband, **in that** the beam generating unit (8, 8'), a beam splitter for forming the first and second component beams (16, 17) and the device (9) for phase modulation or frequency shifting are arranged in an assembly (2) which is spatially separate from the measuring probe (3) and designed as a modulation interferometer, and **in that** arranged in the assembly (2), in the beam path of a component beam, is a time-delay element (10) that produces a difference in the optical path lengths of the two component beams (16, 17) which is longer than the coherence length of the radiation output by the beam generating unit (8, 8').

2. Measuring device according to Claim 1, **characterized in that** the beam generating unit (8, 8') is a light source outputting the short temporally coherent and broadband radiation.

3. Measuring device according to Claim 1 or 2, **characterized in that** the assembly (2) and the measuring probe (3) are coupled to one another by means of an optical conductor arrangement (6).

4. Measuring device according to one of the preceding claims, **characterized in that**, in a fashion corresponding to a Mach-Zehnder interferometer, the assembly (2) has a first beam splitter (18) for forming the first and second component beams (16, 17), and a second beam splitter, to which the first and the second component beam (16, 17) are fed and onto which the two component beams (16, 17) are superimposed and which passes on the beam guided to the measuring probe (3).

5. Measuring device as claimed in one of the preceding claims, **characterized in that** the beam generating unit (8, 8') has a short temporally coherent, broadband and spatially coherent auxiliary light source (8') which can be operated to increase the luminous intensity or as a replacement light source.

6. Measuring device according to one of the preceding claims, **characterized in that** an additional device (9') for frequency shifting is arranged in the beam path of one of the two component beams (16, 17) for the purpose of shifting the frequency of the first component beam (16) with reference to the second component beam (17), and **in that** the device (9) and the additional device (9') for frequency shifting are acousto-optic modulators.

7. Measuring device according to one of the preceding claims, **characterized in that** the beam splitting and beam receiving unit (13) is a spectral apparatus for splitting the light into a plurality of wavelengths, and a downstream photodetector matrix for the selective reception of these wavelengths, **in that** the beam splitting and beam receiving unit (13) is likewise accommodated in the assembly (2), **in that** the beam splitting and the beam receiving unit (13) is coupled to the measuring probe (3) via the optical fibre arrangement (6), and **in that** the phase differences in signals from individual detectors of the photodetector matrix are used to determine the profile or the distance of the measurement surface.

8. Measuring device according to one of the preceding claims, **characterized in that** the measuring probe (3) with the measuring arm (3.1), the measuring reference arm (3.2) and a beam splitter of the measuring probe (3) are designed as a Michelson or Mirau interferometer, and **in that** an optical path difference generated in the measuring arm (3.1) and in the measuring reference arm (3.2) cancels the optical path difference generated by means of the time-delay element (10).

9. Measuring device according to one of the preceding claims, **characterized in that**, starting from the second beam splitter (12), a further beam path is formed which leads to a reference probe (5) with a reference probe reference arm (5.2) and a reference probe measuring arm (5.1), **in that** a further beam splitting and beam receiving unit (13') is provided in the assembly (2), and **in that** the assembly (2) is coupled to the reference probe (5) via a further optical fibre arrangement (7).

10. Use of the measuring device according to one of the preceding claims, **characterized in that** the measuring device is used to measure the internal geometry of bores.

**Revendications**

1. Installation de mesure interférométrique (1) pour déterminer le profil ou la distance notamment de surfaces rugueuses, comprenant au moins une unité générant un faisceau cohérent dans l'espace (8, 8') et dont le rayonnement est divisé en un faisceau de référence de mesures fourni à une sonde de mesure (3) de l'installation de mesure dans une branche de référence de mesures (3.2) pour y être réfléchie, et en un faisceau de mesures passant par une branche de mesures (3.1) et réfléchi par la surface rugueuse,

une installation (9) pour moduler la phase de la lumière ou décaler la fréquence de la lumière selon une fréquence hétérodyne d'un premier faisceau partiel (16) par rapport à la phase ou à la fréquence de la lumière d'un second faisceau partiel (17),

une unité de superposition pour combiner le faisceau de référence de mesures réfléchi et le faisceau de mesures réfléchi,

une unité de décomposition et de réception de faisceaux (13) pour diviser le faisceau combiné en au moins deux faisceaux de longueurs d'ondes différentes et transformer le rayonnement en signaux électriques, et

une unité d'exploitation (14) dans laquelle on détermine le profil ou la distance de la surface rugueuse à partir de la différence de phase des signaux électriques,

**caractérisé en ce que**

le rayonnement émis par l'unité générant le faisceau (8, 8') est un rayonnement à cohérence brève et bande large,

l'unité générant le faisceau (8, 8') comporte un diviseur de faisceau pour former le premier et le second faisceaux partiels (16, 17) et l'installation (9) de modulation de phase ou de décalage de la fréquence font partie d'un ensemble (2) en forme d'interféromètre à modulation, séparé dans l'espace de la sonde de mesure (3), et

l'ensemble (2) comporte dans le chemin d'un faisceau partiel, un élément à retard (10) donnant une différence de trajet optique pour les deux faisceaux (16, 17) qui soit plus longue que la longueur de cohérence du rayonnement émis par le générateur de faisceaux (8, 8').

2. Installation de mesure interférométrique selon la revendication 1,
**caractérisée en ce que**
l'unité générant le faisceau (8, 8') est une source lumineuse émettant le rayonnement à cohérence brève dans le temps et à bande large.

3. Installation de mesure interférométrique selon la revendication 1 ou 2,
**caractérisée en ce que**
l'ensemble (2) et la sonde de mesure (3) sont couplés par un dispositif à guide de lumière (6).

4. Installation de mesure interférométrique selon l'une des revendications précédentes,
**caractérisée en ce que**

l'ensemble (2) comprend un premier diviseur de faisceau (18) pour former le premier et le second faisceau partiels (16, 17) et un second diviseur de faisceaux recevant le premier et le second faisceaux divisé (16, 17) et combinant les deux faisceaux divisés (16, 17), le second diviseur retransmettant le faisceau transmis à la sonde de mesure (3) de façon à constituer par un interféromètre Mach-Zehnder.

5. Installation de mesure interférométrique selon l'une des revendications précédentes, **caractérisée en ce que** l'unité générant le faisceau (8, 8') comporte une source lumineuse complémentaire (8') à cohérence brève et bande large et cohérente dans l'espace, fonctionnant pour augmenter l'intensité lumineuse ou servir de source de lumière de remplacement.

6. Installation de mesure interférométrique selon l'une des revendications précédentes, **caractérisée en ce que** pour le décalage de la fréquence du premier faisceau partiel (16) par rapport au second faisceau partiel (17), le chemin de l'un des deux faisceaux partiels (16, 17) comporte une installation supplémentaire (9') pour le décalage en fréquence, et l'installation (9) et l'installation supplémentaire (9') pour décaler la fréquence sont des modulateurs acousto-optiques.

7. Installation de mesure interférométrique selon l'une quelconque des revendications précédentes, **caractérisée en ce que** l'unité de décomposition et de réception de faisceaux (13) est un appareil spectral pour diviser la lumière en plusieurs longueurs d'onde avec en aval une matrice de photodétecteurs pour la réception sélective de ces longueurs d'onde, l'unité de décomposition et de réception de faisceaux (13) est également logée dans l'ensemble (2), l'unité de décomposition et de réception de faisceaux (13) est couplée par le dispositif à fibres guides de lumière (6) à la sonde de mesure (3), et la différence des phases des signaux des différents détecteurs de la matrice à photodétecteurs est utilisée pour déterminer la forme ou la distance de la surface à mesurer.

8. Installation de mesure interférométrique selon l'une des revendications précédentes, **caractérisée en ce que** la sonde de mesure (3) avec sa branche de mesures (3.1), sa branche de référence de mesures (3.2) et son diviseur de faisceaux forme un interféromètre de Michelson ou de Mirau, et la différence de parcours optique générée dans la branche de mesure (3.1) et la branche de référence de mesures (3.2) compense la différence de trajet optique générée par l'élément de retard (10).

9. Installation de mesure interférométrique selon l'une des revendications précédentes, **caractérisée en ce que** partant du second diviseur de faisceaux (12), on a un autre chemin de faisceaux relié à une sonde de référence (5) avec un bras de référence (5.2) et un bras de mesures (5.1) pour cette sonde de référence, l'ensemble (2) comporte une autre unité de décomposition et de réception de faisceaux (13'), et l'ensemble (3) est couplé à la sonde de référence (5) par un autre dispositif à fibres guides de lumière (7).

10. Application de l'installation de mesure selon l'une des revendications précédentes, **caractérisée en ce que** l'installation de mesures est utilisée pour une mesure de géométrie interne de perçages.